(19) Europäisches Patentamt European Patent Office Office européen des brevets

(11) **EP 1 943 625 B1**

(12) **EUROPÄISCHE PATENTSCHRIFT**

(45) Veröffentlichungstag und Bekanntmachung des Hinweises auf die Patenterteilung:
**19.06.2019  Patentblatt 2019/25**

(51) Int Cl.:
*G06T 5/00* (2006.01)    *G02B 21/00* (2006.01)

(21) Anmeldenummer: **06806586.1**

(22) Anmeldetag: **27.10.2006**

(86) Internationale Anmeldenummer:
**PCT/EP2006/010374**

(87) Internationale Veröffentlichungsnummer:
**WO 2007/051566 (10.05.2007 Gazette 2007/19)**

(54) **VERFAHREN UND VORRICHTUNG ZUR REKONSTRUKTION VON BILDERN**

IMAGE PROCESSING METHOD AND DEVICE

PROCEDE ET DISPOSITIF DE TRAITEMENT D'IMAGE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **01.11.2005  DE 102005052061**

(43) Veröffentlichungstag der Anmeldung:
**16.07.2008  Patentblatt 2008/29**

(73) Patentinhaber: **Carl Zeiss Microscopy GmbH 07745 Jena (DE)**

(72) Erfinder:
• **SCHÄFER, Lutz
  Kitchener, Ontario N2P 2A2 (CA)**
• **SCHUSTER, Dietwald
  93077 Bad Abbach (DE)**

(74) Vertreter: **Hertz, Oliver
  v. Bezold & Partner
  Patentanwälte - PartG mbB
  Akademiestrasse 7
  80799 München (DE)**

(56) Entgegenhaltungen:
• **SCHAEFER L H ET AL: "Structured illumination microscopy: artefact analysis and reduction utilizing a parameter optimization approach" JOURNAL OF MICROSCOPY BLACKWELL SCIENCE UK, Bd. 216, November 2004 (2004-11), Seiten 165-174, XP008084722 ISSN: 0022-2720 in der Anmeldung erwähnt**
• **JÄHNE B: "Digitale Bildverarbeitung, 4. Auflage" 1997, SPRINGER-VERLAG , BERLIN, HEIDELBERG, DE , XP001152055 ISBN: 3-540-61379-X Kapitel 9**
• **FEDOSSEEV R ET AL: "Structured light illumination for extended resolution in fluorescence microscopy" OPTICS AND LASERS IN ENGINEERING, ELSEVIER, Bd. 43, Nr. 3-5, März 2005 (2005-03), Seiten 403-414, XP004629259 ISSN: 0143-8166**
• **NEIL M A A ET AL: "METHOD OF OBTAINING OPTICAL SECTIONING BY USING STRUCTURED LIGHT IN A CONVENTIONAL MICROSCOPE" OPTICS LETTERS, OSA, OPTICAL SOCIETY OF AMERICA, WASHINGTON, DC, US, Bd. 22, Nr. 24, 15. Dezember 1997 (1997-12-15), Seiten 1805-1807, XP000733996 ISSN: 0146-9592**

**Beschreibung**

Die Erfindung betrifft Verfahren zur Bildverarbeitung, insbesondere ein Verfahren zur Rekonstruktion von Bildern, die mit einem Mikroskop mit strukturierter Beleuchtung aufgenommen wurden, und ein Abbildungsverfahren zur mikroskopischen Abbildung eines Objekts. Die Erfindung betrifft auch Vorrichtungen zur Umsetzung der genannten Verfahren, insbesondere eine Abbildungsvorrichtung, wie z. B. ein Mikroskop, und eine Rekonstruktionseinrichtung zur Bildrekonstruktion, und Anwendungen der Verfahren.

In der optischen Mikroskopie wurden verschiedene Verfahren zur tiefenaufgelösten Abbildung von Objekten entwickelt, z. B. um in einem bestimmten Bereich ein Schnittbild durch eine Probe oder durch die Aufnahme einer Vielzahl von Schnittbildern eine dreidimensionale Repräsentation der Probe zu erhalten. Beispielsweise wird bei der Konfokalmikroskopie mit einer konfokalen, punktweisen Beleuchtung und Abbildung Bildinformation ausschließlich in der interessierenden Schnittebene gesammelt. Nachteile der Konfokalmikroskopie bestehen insbesondere wegen des komplexen Mikroskopaufbaus und der aufwändigen Sammlung der Bildinformation.

Ein weiteres Verfahren ist die Mikroskopie mit strukturierter Beleuchtung (SIM-Technik). Bei diesem Verfahren der Weitfeld-mikroskopie wird eine periodische Gitterstruktur in die interessierende Schnittebene der Probe fokussiert. Durch die Abbildung der Gitterstruktur in die Schnittebene wird eine Modulation der Beleuchtung im Ortsraum eingeführt, wodurch das sog. "missing cone"-Problem der Weitfeldmikroskopie überwunden wird. Aus mehreren Zwischenbildern, die jeweils mit einer anderen Phasenlage der Gitterstruktur aufgenommen werden, kann eine Bildfunktion berechnet werden, die ein Bild der Schnittebene im realen Objekt darstellt. Die herkömmliche Mikroskopie mit strukturierter Beleuchtung hat jedoch den generellen Nachteil, dass das aus den Zwischenbildern rekonstruierte Bild eine Näherung darstellt, deren Qualität insbesondere durch Artefakte und Instabilitäten eingeschränkt sein kann.

In WO 2004/038483 A1 und in der Publikation von L. H. Schaefer et al. ("Journal of Microscopy", Bd. 216, 2004, S. 165-174) wird ein Verfahren zur Mikroskopie mit strukturierter Beleuchtung beschrieben, mit dem die Bildrekonstruktion verbessert wird. Auf der Grundlage eines Rekonstruktionsalgorithmus, der die Sammlung der Bildinformation mit einem dreidimensionalen Modell beschreibt, wurde vorgeschlagen, z. B. Helligkeitsschwankungen bei der Objektbeleuchtung oder Ausbleicherscheinungen im Objekt, die im Zeitverlauf während der Aufnahme der Zwischenbilder auftreten können, bei der Bildrekonstruktion zu berücksichtigen. In der Praxis hat sich jedoch gezeigt, dass die Qualität der Bildrekonstruktion in speziellen Anwendungsfällen, insbesondere bei der Untersuchung biologischer Proben, unerwünschte Beschränkungen zeigt. Diese äußern sich z. B. darin, dass Details der realen Probe nur mit ungenügender Auflösung abgebildet werden.

Die Aufgabe der Erfindung ist es, ein verbessertes Verfahren zur Bildrekonstruktion aus Zwischenbildern eines mit strukturierter Beleuchtung abgebildeten Objektes bereitzustellen, mit dem die Nachteile der herkömmlichen Techniken überwunden werden. Das Rekonstruktionsverfahren soll insbesondere eine Abbildung von optischen Schnitten mit einer verbesserten Ortsauflösung ermöglichen. Die Aufgabe der Erfindung ist es ferner, ein verbessertes Abbildungsverfahren zur Gewinnung von Bildern von strukturiert beleuchteten Objekten bereitzustellen. Die Aufgabe der Erfindung ist es auch, eine entsprechend verbesserte Abbildungsvorrichtung bereitzustellen.

Diese Aufgabe wird durch Verfahren und Vorrichtungen mit den Merkmalen der Patentansprüche 1 oder 11 gelöst. Vorteilhafte Ausführungsformen und Anwendungen der Erfindung ergeben sich aus den abhängigen Patentansprüchen.

Verfahrensbezogen basiert die Erfindung gemäß einem ersten Aspekt auf der allgemeinen technischen Lehre, zur Rekonstruktion einer Bildfunktion optische Schnittbilder, die auf der Basis einer Abbildung mit strukturierter Beleuchtung ermittelt wurden, zunächst einer Korrektur zu unterziehen, mit der die Wirkung der Punkttransferfunktion des zur Beleuchtung verwendeten Systems kompensiert wird. Anschließend wird die gesuchte Bildfunktion aus den korrigierten optischen Schnittbildern berechnet. Die optischen Schnittbilder sind insbesondere nach Faltungen einer Objektfunktion mit einer modifizierten Beleuchtungs-Punkttransferfunktion gebildet. Die Erfinder haben festgestellt, dass die bei der Beleuchtung eines Objektes realisierten Faltungen, die zu einer Verwaschung von Strukturen führen, bei den herkömmlichen Verfahren vernachlässigt wurden und dass die Wirkungen der Faltungen durch eine Dekonvolution mit Dekonvolutionsoperatoren, insbesondere mit Filteroperatoren, die invers zu den durch die Faltungen repräsentierten Operationen sind, in den korrigierten optischen Schnittbildern rückgängig gemacht werden können.

Die Bildfunktion kann erfindungsgemäß insbesondere aufgezeichnet, angezeigt und/oder gespeichert werden. Eine Aufzeichnung umfasst z. B. eine Aufnahme mit einem Aufzeichnungsmedium. Eine Anzeige umfasst z. B. eine Darstellung mit einem Anzeigegerät. Eine Speicherung umfasst z. B. eine Ablage der Bildfunktion in einem Bildspeicher, z. B. auf einer Festplatte, einem optischen Datenspeicher o. dgl..

Durch die Korrektur der optischen Schnittbilder wird die reale Wirkung der Punkttransferfunktion der Beleuchtung kompensiert, so dass vorteilhafterweise eine Bildfunktion mit einem verbesserten Auflösungsvermögen und einem vergrößerten Signal-Rausch-Verhältnis erreicht wird. Die erfindungsgemäß berechnete Bildfunktion repräsentiert eine erheblich verbesserte Näherung der realen Objektfunktion. Ein weiterer wichtiger Vorteil besteht darin, dass ohne Beeinträchtigung der Qualität der Bildrekonstruktion zur strukturierten Beleuchtung eine gröbere Gitterstruktur verwendet werden kann, die mehr Licht durchlässt und ein entsprechend weiter verbessertes Signal-Rausch-Verhältnis ergibt.

In der vorliegenden Beschreibung wird mit der "Objektfunktion" ($f$) eine von Ortskoordinaten x und y abhängige reale Amplitude des in der interessierenden Schnittebene des untersuchten Objekts (Probe) vorhandenen Lichtes (z. B. Transmission, Reflektion oder Fluoreszenz) bezeichnet. Die "Bildfunktion" ($r$) ist die durch die erfindungsgemäße Rekonstruktion ermittelte Approximation (Bild) der Objektfunktion. Die optischen Schnittbilder ($g_c, g_s$) werden aus "Zwischenbildern" berechnet, die mit der an sich bekannten periodisch strukturierten Beleuchtung des Objekts mit verschiedenen Phasenlagen der Gitterstruktur detektiert werden. Mit der "Punkttransferfunktion" (englisch: Point Spread Function, PSF; Fourier-Transformierte der PSF: Optical Transfer Function, OTF) wird die Übertragung des Lichtes und ggf. der Bildinformation im optischen System beschrieben, das zur Abbildung verwendet wird. Die "Beleuchtungs-Punkttransferfunktion" beschreibt die Übertragung des Lichtes von der Lichtquelle über die Gitterstruktur bis zur Probe. Die "Detektions-Punkttransferfunktion" beschreibt die Übertragung des Lichtes von der Probe bis zur Kamera. Mit dem Begriff "modifizierte Beleuchtungs-Punkttransferfunktion" wird die PSF bezeichnet, die durch die Ausdehnung der Gitterstruktur in axialer Richtung (z-Richtung) modifiziert ist.

Ein weiterer Vorteil der Erfindung besteht darin, dass keine Beschränkung in Bezug auf die Konstruktion der Filteroperatoren bestehen, welche zur Korrektur der optischen Schnittbilder verwendet werden. Es kann insbesondere jeder digitale Filter verwendet werden, welcher die Funktion einer zumindest näherungsweisen Umkehrung der Faltung des Beleuchtungslichtes mit der Beleuchtungs-Punkttransferfunktion oder einer davon abgeleiteten Funktion erfüllt.

Gemäß einer bevorzugten Ausführungsform der Erfindung umfassen die Filteroperatoren lineare, regularisiert-inverse Operatoren. Wenn die Filteroperatoren gemäß einer bevorzugten Variante im Fourier-Raum wirken, ergeben sich der Vorteil, dass die Dekonvolution im Ortsfrequenzbereich effektiver ausführbar ist.

Gemäß einer bevorzugten Ausführungsform der Erfindung kann das erfindungsgemäße Rekonstruktionsverfahren auf optische Schnittbilder unmittelbar nach deren Berechnung bei einer mikroskopischen Abbildung mit strukturierter Beleuchtung angewendet werden. Vorteilhafterweise wird in diesem Fall die gesuchte Bildfunktion direkt aus den optischen Schnittbildern gebildet, indem die bei der aktuellen Abbildung realisierten Faltungsoperationen der Objektfunktion mit der modifizierten Beleuchtungs-Punkttransferfunktion umgekehrt werden. Gemäß einer alternativen Ausführungsform der Erfindung kann das erfindungsgemäße Rekonstruktionsverfahren auf optische Schnittbilder angewendet werden, die durch eine Rückmodulation aus einer mit einer herkömmlichen Technik ermittelte Bildfunktion berechnet worden sind. Bei dieser Variante ist der besondere Vorteil gegeben, dass der Informationsgehalt einer bereits rekonstruierten Bildfunktion nachträglich verbessert werden kann.

Weitere bevorzugte Ausführungsformen der Erfindung sind unten in Zusammenhang mit einer mathematischen Beschreibung der Bildrekonstruktion genannt.

Verfahrensbezogen wird die oben genannte Aufgabe gemäß einem zweiten Aspekt der Erfindung durch ein Abbildungsverfahren zur Gewinnung einer Bildfunktion eines Objekts gelöst, bei dem mit einer periodisch strukturierten Beleuchtung des Objekts jeweils mit verschiedenen Phasen der zur Beleuchtung verwendeten Gitterstruktur mehrere Zwischenbilder aufgenommen und aus diesen optische Schnittbilder berechnet werden, wobei die optischen Schnittbilder dem Verfahren zur Rekonstruktion der Bildfunktion gemäß dem oben genannten ersten Aspekt der Erfindung unterzogen werden. Mit dem Abbildungsverfahren können vorteilhafterweise tiefenaufgelöste Bilder mit verbesserter Bildqualität bereitgestellt werden.

Vorrichtungsbezogen wird die oben genannte Aufgabe gemäß einem weiteren Aspekt der Erfindung durch eine Abbildungsvorrichtung gelöst, die eine Bildaufnahmeeinrichtung zur periodisch strukturierten Beleuchtung des Objekts und zur Detektion einer Vielzahl von Zwischenbildern, einen Schnittbildrechner zur Berechnung von optischen Schnittbildern aus den Zwischenbildern, und eine Rekonstruktionseinrichtung zur Rekonstruktion einer Bildfunktion aufweist, die eine Objektfunktion des Objekts repräsentiert. Die Rekonstruktionseinrichtung (Rekonstruktionsschaltkreis) enthält eine Filterschaltung zur Anwendung von vorbestimmten Filteroperatoren auf die optischen Schnittbilder zur Erzeugung von korrigierten optischen Schnittbildern und eine Demodulationsschaltung zur Erzeugung der Bildfunktion aus den korrigierten optischen Schnittbildern. Vorzugsweise ist die Rekonstruktionseinrichtung zur Ausführung des erfindungsgemäßen Bildrekonstruktionsverfahrens eingerichtet.

Gemäß einer bevorzugten Ausführungsform der Erfindung ist die Abbildungsvorrichtung ein optisches Mikroskop mit strukturierter Beleuchtung, das mit der Rekonstruktionseinrichtung ausgestattet ist. Die Rekonstruktionseinrichtung stellt einen unabhängigen Gegenstand der Erfindung dar. Vorteilhafterweise kann ein herkömmliches Mikroskop mit strukturierter Beleuchtung einfach mit der Rekonstruktionseinrichtung nachgerüstet werden.

Weitere unabhängige Gegenstände der Erfindung sind ein Computer-Programmprodukt auf einem elektronischen, magnetischen oder optischen Speichermedium mit einem Programmcode zur Ausführung des erfindungsgemäßen Rekonstruktionsverfahrens, und das Speichermedium, das Programmanweisungen zur Ausführung des erfindungsgemäßen Rekonstruktionsverfahrens enthält.

Weitere Einzelheiten und Vorteile der Erfindung werden im Folgenden unter Bezug auf die beigefügten Zeichnungen beschrieben. Es zeigen:

Figur 1: ein Flussdiagramm zur Illustration eines Bildrekonstruktionsverfahrens gemäß einer Ausführungsform der Erfindung,

Figur 2: eine schematische Illustration einer Abbildungsvorrichtung gemäß einer Ausführungsform der Erfindung, und

Figur 3: Bildbeispiele, die den mit der Erfindung erreichten Qualitätsgewinn zeigen.

Die Erfindung wird im Folgenden unter Bezug auf die Umsetzung der Rekonstruktion der Bildfunktion beschrieben. Einzelheiten der Bildaufnahme mit einem Mikroskop mit strukturierter Beleuchtung sind an sich bekannt und werden daher hier nicht erläutert.

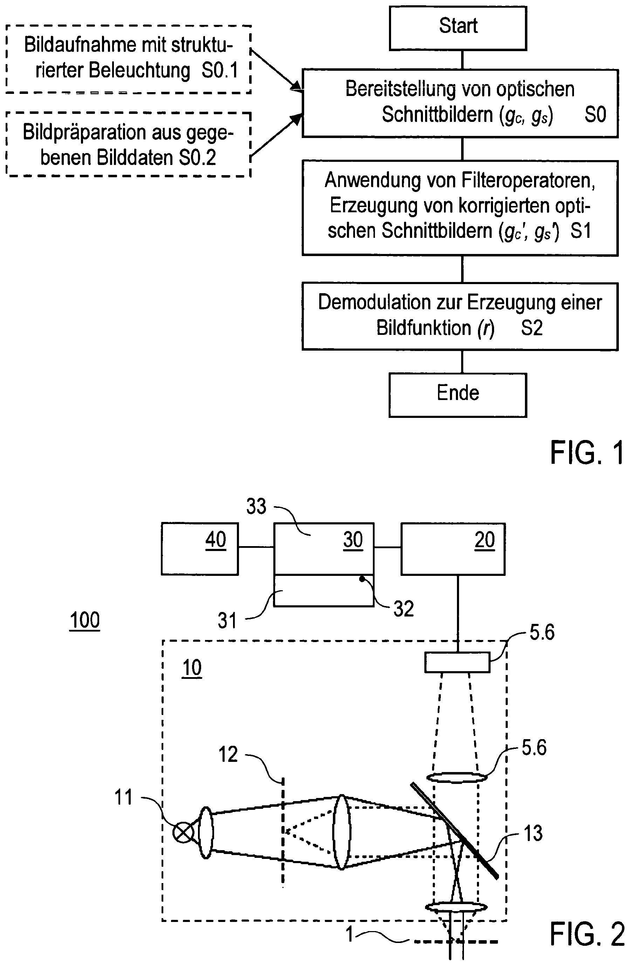

Figur 1 illustriert mit den Schritten S0 bis S2 einen Ablauf des erfindungsgemäßen Rekonstruktionsverfahrens, dessen Einzelheiten unten in Zusammenhang mit dem erfindungsgemäßen Abbildungsverfahren erläutert sind. Die optischen Schnittbilder, die Ausgangspunkt der Rekonstruktion sind, können direkt aus Zwischenbildern einer Bildaufnahme mit strukturierter Beleuchtung berechnet werden. In diesem Fall wird mit den Schritten S0.1 bis S2 das erfindungsgemäßen Abbildungsverfahren realisiert. Alternativ können die optischen Schnittbilder mit einer Bildpräparation aus vorab aufgenommenen und gespeicherten Zwischenbildern oder rekonstruierten Bildfunktionen bereitgestellt werden, um das Rekonstruktionsverfahren auf vorgegebene Bilddaten anzuwenden (Schritte S0.2 bis S2).

Beim erfindungsgemäßen Abbildungsverfahren S0.1 bis S2 erfolgt zunächst wie bei herkömmlichen Techniken eine Bildaufnahme mit der Methode der strukturierten Beleuchtung. Bei der Bildaufnahme werden in einem ersten Teilschritt zunächst mehrere Zwischenbilder $g_i$ ermittelt.

Mit einer Gitterstruktur $s_i$, die durch eine Ortsfrequenz $\omega$ und eine Phase $\varphi$ charakterisiert ist und gemäß

$$s_i(x,z) = \delta(z)[1 + m\cos(\omega x + \varphi_i)] \qquad (1)$$

beschrieben werden kann, ergibt sich mit den Koordinaten $\hat{x}_k = (x_k, y_k, z_k)$ und den Differentialen $\hat{dx}_k = dx_k dy_k dz_k$ die Darstellung der Zwischenbilder $g_i$, wie es von L. H. Schaefer et al. in "Journal of Microscopy" (s.o.) beschrieben wird, gemäß:

$$g_i(\underline{x}) = \iiint f(\underline{x}_1) h_D(\underline{x} - \underline{x}_1)^2 \times \iiint s_i(x - x_0, z - z_0 - z_1) h_I(\underline{x}_0)^2 d\underline{x}_0 d\underline{x}_1 \qquad (2)$$

oder vereinfacht

$$g_i = h_D * (f \cdot [h_I * s_i]) = g_w + g_c \cos\varphi_i + g_s \sin\varphi_i \qquad (3)$$

In Gleichung (3) repräsentieren $g_w$ das herkömmliche mikroskopische Weitfeldbild und $g_c$, $g_s$ optische Schnittbilder. $h_I$ und $h_D$ sind die Beleuchtungs- und Detektions-Punkttransferfunktionen.

Wenn mindestens drei Zwischenbilder $g_i$ mit verschiedenen Phasen $\varphi$ aufgenommen werden, ergibt sich mit (3) ein Gleichungssystem, aus dem in einem weiteren Teilschritt die optischen Schnittbilder $g_c$, $g_s$ getrennt berechnet werden. Die optischen Schnittbilder $g_c$, $g_s$ werden als Eingangsgrößen des erfindungsgemäßen Rekonstruktionsverfahrens bereitgestellt (Schritt S0).

Bei der herkömmlichen Technik erfolgte die Rekonstruktion der gesuchten Bildfunktion $f$ auf der Grundlage von Näherungen gemäß $g_c(\underline{x}) \approx [f\cos(\omega x)]$ und $g_s(\underline{x}) \approx -[f\sin(\omega x)]$. Die Erfinder haben jedoch die beschränkte Qualität dieser Näherungen festgestellt. Die optischen Schnittbilder $g_c$, $g_s$ sind im realen optischen System nach Faltungsoperationen der Objektfunktion ($f$) mit einer modifizierten Beleuchtungs-Punkttransferfunktion ($h_I$) gebildet. Diese Faltungen können gemäß einer bevorzugten Ausführungsform der Erfindung und mit der oben genannten Gitterstruktur (1) wie folgt beschrieben werden

$$g_c(\underline{x}) = (f(\underline{x})\cos(\omega x)) * \left( v(z) h_D(\underline{x})^2 \right)$$

$$g_s(\underline{x}) = (f(\underline{x})\cos(\omega x)) * \left( v(z) h_D(\underline{x})^2 \right) \qquad (4)$$

mit $v(z) = \int cos(\omega x_1)[\int |h_I(x_1, y_1, z)|^2 dy_1] dx_I$,

Gemäß abgewandelten Ausführungsformen der Erfindung kann der Ausdruck $v(z)$ durch andere Modifizierungen der Beleuchtungs-Punkttransferfunktion ersetzt werden, die durch das konkret realisierte optische System gegeben sind.

Erfindungsgemäß werden bei Schritt S1 auf die detektierten optischen Schnittbilder ($g_c$, $g_s$) Filteroperatoren angewendet, um korrigierte optische Schnittbilder ($g_c'$, $g_s'$) zu ermitteln. Statt der o. g. einfachen herkömmlichen Approximation werden für die Objektfunktion $f$ die korrigierten optischen Schnittbilder bereitgestellt, die vorzugsweise mit den Filteroperatoren berechnet werden gemäß:

$$g_c' = F^{-1}\left\{\frac{H_D^* G_C}{|H_D|^2 + \beta}\right\} = f\,cos(\omega x) \quad \text{und}$$

$$g_s' = -F^{-1}\left\{\frac{H_D^* G_S}{|H_D|^2 + \beta}\right\} = f\,sin(\omega x) \tag{5}$$

wobei

$H_D = F\{v|h_D|^2\}$ $G_C = F\{g_c\}$, $G_S = F\{g_s\}$ und $\beta$ ein vorbestimmter Regularisierungsparameter ist.

Die dargestellten Filteroperatoren, die auf die Schnittbilder getrennt angewendet werden, sind regularisierte Inversfilter mit der hier beispielhaft verwendeten Tikhonov-Regularisierung. Die Gleichungen (5) beschreiben das Inversfilter, mit dem die Faltungsoperationen (4) rückgängig gemacht werden, so dass sich eine neue und bessere Näherung für die Objektfunktion $f$ ergibt. Durch die Verschiebungseigenschaft der Fouriertransformation wird die negative Wirkung des "missing cone"-Problems der Weitfeldmikroskopie unwirksam. In den Ausdrücken (5) treten keine achsialen Ortsfrequenzen im Koordinatenursprung auf, bei denen $H_D$ sehr kleine Werte aufweist. Alternativ zu dem regularisierten Inversfilter kann jede andere Dekonvolutionmethode angewendet werden, um die korrigierten optischen Schnittbilder zu berechnen.

Der Regularisierungsparameter $\beta$ kann für jede konkrete Anwendung der Erfindung empirisch oder mit numerischen Verfahren (z. B. mit der sog. "generalized cross validation") ermittelt werden. Es kann ferner eine Einstellung von $\beta$ in Abhängigkeit von mindestens einer Eigenschaft der optischen Schnittbilder ($g_c$, $g_s$), wie zum Beispiel in Abhängigkeit von Störungen in den Schnittbildern durch Rauschen vorgesehen sein. Die Rekonstruktion kann wiederholt mit jeweils geändertem Regularisierungsparameter durchgeführt werden, um die Bildfunktion zu optimieren.

Anschließend erfolgt bei Schritt S2 zur Rekonstruktion des Ergebnisbildes (der gesuchten Bildfunktion) eine Demodulation, bei der die Bildfunktion ($r$) gemäß

$$r = \sqrt{g_c'^2 + g_s'^2} \tag{6}$$

oder als heterodyne Demodulation gemäß

$$r = \left| g_c' + j g_s' \right| e^{j\omega x} \tag{7}$$

berechnet wird. Die heterodyne Demodulation stellt eine lineare Berechnung dar und wird daher bevorzugt angewendet. Alternativ können auch andere Demodulationsprozeduren zur Gewinnung der Bildfunktion aus den korrigierten Schnittbildern verwendet werden, wie sie an sich bekannt sind (siehe z. B. WO 2004/038483 A1)

Wenn gemäß einer alternativen Ausführungsform der Erfindung zur Bereitstellung der optischen Schnittbilder vorab aufgenommene Zwischenbilder oder rekonstruierte Bildfunktionen verarbeitet werden, erfolgt die Rekonstruktion analog zu den oben genannten Schritten. Beispielsweise können aus einer gespeicherten Bildfunktion $r'$ zuerst die Schnittbilder berechnet werden, die dann durch die Filterung einer Korrektur und anschließend erneut der Demodulation unterzogen werden. Die gespeicherte Bildfunktion $r'$ kann mit einer herkömmlichen Technik oder gemäß der Erfindung rekonstruiert worden sein. Im letzteren Fall kann die erneute Rekonstruktion z. B. mit einem veränderten Parameter $\beta$ erfolgen.

Die erfindungsgemäße Abbildungsvorrichtung 100 zur Gewinnung der Bildfunktion *r* eines Objekts 1 umfasst gemäß Figur 2 eine Bildaufnahmeeinrichtung 10 zur periodisch strukturierten Beleuchtung des Objekts 1 und zur Detektion einer Vielzahl von Zwischenbildern $g_i$, einen Schnittbildrechner 20 zur Ermittlung der optischen Schnittbilder $g_c$, $g_s$ aus den Zwischenbildern $g_i$, und eine Rekonstruktionseinrichtung 30 zur Rekonstruktion der Bildfunktion *r,* die eine Objektfunktion *f* des Objekts 1 repräsentiert. Optional ist zusätzlich eine Steuerungs- und Anzeigeeinrichtung 40 vorgesehen. Die Komponenten 20 bis 40 können durch einen oder mehrere Computer bereitgestellt werden.

Die Bildaufnahmeeinrichtung 10 umfasst eine Lichtquelle 11, eine bewegliche Gitterstruktur 12, einen halbdurchlässigen Spiegel 13, optische Komponenten 14 und eine Kamera 15. Diese Komponenten sind an sich von optischen Abbildungssystemen mit strukturierter Beleuchtung bekannt und werden zum Beispiel durch ein Mikroskop vom Typ ApoTome (Carl Zeiss AG) realisiert.

Der Schnittbildrechner 20 ist z. B. ein Rechnerschaltkreis, mit dem das oben genannte Gleichungssystem (3) zur Ermittlung der optischen Schnittbildern $g_c$, $g_s$ gelöst wird.

Die Rekonstruktionseinrichtung 30 umfasst eine Filterschaltung 31 zur Anwendung von der Filteroperatoren (5) auf die optischen Schnittbilder und zur Erzeugung der korrigierten optischen Schnittbildern $g_c'$, $g_s'$ und eine Demodulationsschaltung 33 zur Berechnung der Bildfunktion *r* aus den korrigierten optischen Schnittbildern gemäß (6) oder (7). Die Filterschaltung 31 kann ein schematisch illustriertes Stellelement 32 zur Einstellung des Regularisierungsparameters $\beta$ aufweisen. Das Stellelement 32 kann zur manuellen Einstellung oder zur elektronischen Einstellung (z. B. mit der Steuerungs- und Anzeigeeinrichtung 40) eingerichtet sein.

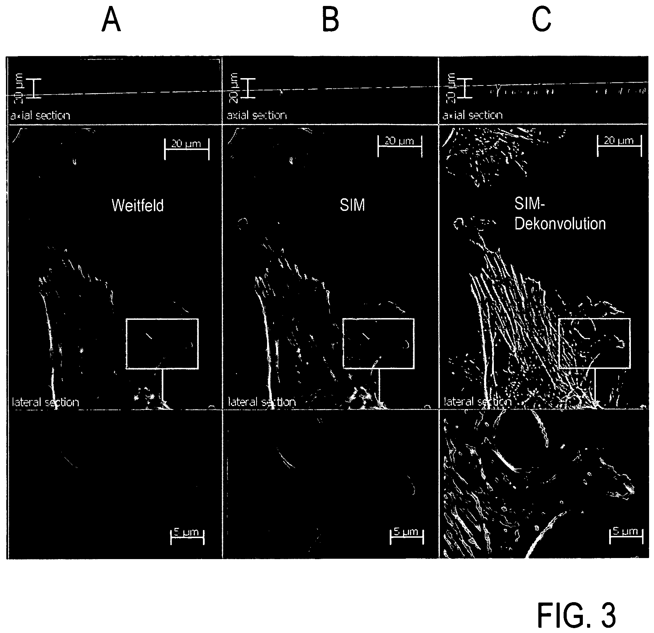

Die Figuren 3A bis 3C illustrieren beispielhaft die Verbesserung des Auflösungsvermögens bei der Abbildung einer biologischen Zelle (Illustration der Aktin-Microtubuli). Es sind jeweils die axiale Auflösung (oben), ein Bildausschnitt (Mitte) und ein vergrößerter Teilausschnitt (unten) gezeigt. Die mit der herkömmlichen Weitfeld-Mikroskopie (Figur 3A) und mit der herkömmlichen SIM-Technik (Figur 3B) erfassten Bilder zeigen nur grobe Umrisse der Zellstruktur, während die erfindungsgemäß mit Dekonvolution der optischen Schnitte rekonstruierte Bildfunktion (Figur 3C) eine wesentlich verbesserte laterale Auflösung aufweist und zahlreiche Einzelheiten erkennen lässt.

Die in der vorstehenden Beschreibung, den Zeichnungen und den Ansprüchen offenbarten Merkmale der Erfindung können sowohl einzeln als auch in Kombination für die Verwirklichung der Erfindung in ihren verschiedenen Ausgestaltungen von Bedeutung sein.

**Patentansprüche**

1. Verfahren zur Rekonstruktion einer Bildfunktion (*r*), die eine Objektfunktion (*f*) eines mit einer Gitterstruktur durch eine periodisch strukturierte Beleuchtung abgebildeten Objektes (1) repräsentiert, aus optischen Schnittbildern ($g_c$, $g_s$), die jeweils aus mit verschiedenen Phasenlagen der Gitterstruktur aufgenommenen Zwischenbildern berechnet sind und nach Faltungsoperationen der Objektfunktion (*f*) mit einer modifizierten Beleuchtungs-Punkttransferfunktion ($h_l$) gebildet sind, welche die Punkttransferfunktion darstellt, die durch die Ausdehnung der Gitterstruktur in axialer Richtung der Abbildung modifiziert ist, **gekennzeichnet durch** die Schritte:

   - Erzeugung (S1) von korrigierten optischen Schnittbildern ($g_c'$, $g_s'$), wobei auf die optischen Schnittbilder ($g_c$, $g_s$) getrennt vorbestimmte Filteroperatoren angewendet werden, die invers zu den Faltungsoperationen sind, und
   - Demodulation (S2) der korrigierten optischen Schnittbilder ($g_c'$, $g_s'$) zur Erzeugung der Bildfunktion (*r*).

2. Verfahren nach Anspruch 1, bei dem die Filteroperatoren

   - lineare, regularisiert-inverse Filteroperatoren umfassen, und/oder
   - aus den Fouriertransformierten der optischen Schnittbilder ($g_c$, $g_s$) und der modifizierten Beleuchtungs-Punkttransferfunktion ($h_l$) konstruiert sind.

3. Verfahren nach mindestens einem der vorhergehenden Ansprüche, bei dem die optischen Schnittbilder ($g_c$, $g_s$) nach den Faltungsoperationen gemäß

$$g_c(\underline{x}) = \left( f(\underline{x}) cos(\omega x) \right) * \left( v(z) \left| h_D(\underline{x}) \right|^2 \right)$$

und

$$g_s(\underline{x}) = -\left(f(\underline{x})\sin(\omega x)\right) * \left(v(z)\left|h_D(\underline{x})\right|^2\right)$$

gebildet sind, wobei ($h_D$) eine Detektions-Punkttransferfunktion und $v(z) = \int cos(\omega x_1)[\int|h_I(x_1(x_1,y_1,z)|^2 dy_1]dx_1$ ist.

4. Verfahren nach Anspruch 3, bei dem die korrigierten optischen Schnittbilder ($g_c'$, $g_s'$) mit Filteroperatoren berechnet werden gemäß:

$$g_c' = f\,cos(\omega x) = F^{-1}\left\{\frac{H_D{}^* G_C}{\left|H_D\right|^2 + \beta}\right\}$$

und

$$g_s' = f\,sin(\omega x) = -F^{-1}\left\{\frac{H_D{}^* G_S}{\left|H_D\right|^2 + \beta}\right\},$$

mit
$H_D = F\{v|h_D|^2\}$, $G_C = F\{g_c\}$, $G_S = F\{g_s\}$, wobei $\beta$ ein vorbestimmter Regularisierungsparameter ist.

5. Verfahren nach Anspruch 4, mit dem Schritt:

- Einstellung des Regularisierungsparameters $\beta$ in Abhängigkeit von mindestens einer Eigenschaft der optischen Schnittbilder ($g_c$, $g_s$).

6. Verfahren nach Anspruch 5, bei dem der Regularisierungsparameters $\beta$ in Abhängigkeit von einem Rauschparameter der optischen Schnittbilder ($g_c$, $g_s$) eingestellt wird.

7. Verfahren nach mindestens einem der vorhergehenden Ansprüche, bei dem zur Demodulation der korrigierten optischen Schnittbilder ($g_c'$, $g_s'$) die Bildfunktion ($r$) gemäß $r = \sqrt{g_c'{}^2 + g_s'{}^2}$ berechnet wird.

8. Verfahren nach mindestens einem der vorhergehenden Ansprüche 1 bis 6, bei dem zur Demodulation der korrigierten optischen Schnittbilder ($g_c'$, $g_s'$) die Bildfunktion ($r$) gemäß $r = \left[g_c' + jg_s'\right]e^{j\omega x}$ berechnet wird.

9. Verfahren nach mindestens einem der vorhergehenden Ansprüche, bei dem die optischen Schnittbilder ($g_c$, $g_s$) unmittelbar nach einer Bildaufnahme gebildet sind (S0.1) oder durch eine Rückmodulation aus einer unkorrigierten Bildfunktion (r') ermittelt werden (S0.2).

10. Abbildungsverfahren zur Gewinnung einer Bildfunktion (r) eines Objekts (1) unter Verwendung eines Verfahren nach mindestens einem der vorhergehenden Ansprüche, mit den Schritten:

- periodisch strukturierte Beleuchtung (S0.11) des Objekts (1),
- Detektion (S0.12) einer Vielzahl von Zwischenbildern ($g'$),
- Ermittlung (S0.13) von optischen Schnittbildern ($g_c$, $g_s$) aus den Zwischenbildern ($g_i$), und
- Rekonstruktion (S1, S2) der Bildfunktion (r) mit dem Verfahren nach mindestens einem der vorhergehenden Ansprüche.

**11.** Abbildungsvorrichtung (100) zur Gewinnung einer Bildfunktion (*r*) eines Objekts (1), umfassend:

- eine Bildaufnahmeeinrichtung (10) zur periodisch strukturierten Beleuchtung des Objekts (1) mittels einer Gitterstruktur und zur Detektion einer Vielzahl von Zwischenbildern (*g'*), die mit verschiedenen Phasenlagen der Gitterstruktur aufgenommenen sind, und
- einen Schnittbildrechner (20) zur Ermittlung von optischen Schnittbildern ($g_c$, $g_s$) aus den jeweiligen Zwischenbildern ($g_i$), wobei die optischen Schnittbilder ($g_c$, $g_s$) nach Faltungsoperationen der Objektfunktion (*f*) mit einer modifizierten Beleuchtungs-Punkttransferfunktion ($h_l$) gebildet sind, welche die Punkttransferfunktion darstellt, die durch die Ausdehnung der Gitterstruktur in axialer Richtung der Abbildung modifiziert ist,

**gekennzeichnet durch**

- eine Rekonstruktionseinrichtung (30) zur Rekonstruktion einer Bildfunktion (*r*), die eine Objektfunktion (*f*) des Objekts (1) repräsentiert, aus den optischen Schnittbildern ($g_c$, $g_s$), wobei die Rekonstruktionseinrichtung eine Filterschaltung (31) zur getrennten Anwendung von vorbestimmten Filteroperatoren, die invers zu den Faltungsoperationen sind, auf die optischen Schnittbilder ($g_c$, $g_s$) zur Erzeugung von korrigierten optischen Schnittbildern ($g_c'$, $g_s'$), und eine Demodulationsschaltung (33) zur Erzeugung der Bildfunktion (*r*) aus den korrigierten optischen Schnittbildern ($g_c'$, $g_s'$) enthält.

**12.** Abbildungsvorrichtung nach Anspruch 11, bei der die Rekonstruktionseinrichtung (30) zur Ausführung eines Rekonstruktionsverfahrens nach mindestens einem der Ansprüche 1 bis 9 eingerichtet ist.

**13.** Abbildungsvorrichtung nach Anspruch 11 oder 12, bei der

- die Filterschaltung (31), wenn zur Ausführung eines Verfahrens nach Anspruch 4 eingerichtet, ein Stellelement (32) zur Einstellung des Regularisierungsparameters $\beta$ aufweist, und/oder
- die Bildaufnahmeeinrichtung (100) Teil eines optischen Mikroskops ist.

**14.** Mikroskop, das eine Abbildungsvorrichtung (100) nach mindestens einem der Ansprüche 11 bis 13 aufweist.

**15.** Rekonstruktionseinrichtung (30), die zur Rekonstruktion einer Bildfunktion (*r*), die eine Objektfunktion (*f*) eines Objekts (1) repräsentiert, aus optischen Schnittbildern ($g_c$, $g_s$), mit einem Verfahren nach einem der Ansprüche 1 bis 9 ausgelegt ist, umfassend:

- eine Filterschaltung (31) zur Anwendung von vorbestimmten Filteroperatoren auf die optischen Schnittbilder ($g_c$, $g_s$) zur Erzeugung von korrigierten optischen Schnittbildern ($g_c'$, $g_s'$), und
- eine Demodulationsschaltung (33) zur Erzeugung der Bildfunktion (*r*) aus den korrigierten optischen Schnittbildern ($g_c'$, $g_s'$) enthält.

**16.** Mikroskop, das eine Rekonstruktionseinrichtung (30) nach Anspruch 15 aufweist.

**17.** Computer-Programmprodukt, das sich auf einem Computerlesbaren Speichermedium befindet, mit einem Programmcode zur Ausführung eines Rekonstruktionsverfahrens nach mindestens einem der Ansprüche 1 bis 9.

**18.** Vorrichtung, die ein Computer-lesbares Speichermedium umfasst, das Programmanweisungen zur Ausführung eines Rekonstruktionsverfahrens nach mindestens einem der Ansprüche 1 bis 9 enthält.

**Claims**

**1.** Method for reconstructing an image function (*r*), which represents an object function (*f*) of an object (1) that is imaged by a grating structure by way of a periodically structured illumination, from optical sectional images ($g_c$, $g_s$), which are each calculated from intermediate images recorded with different phase angles of the grating structure and which are constructed by convolution operations of the object function (*f*) with a modified illumination point spread function ($h_1$), which represents the point spread function that is modified by the extent of the grating structure in the axial direction of the imaging, **characterized by** the steps of:

- producing (S1) corrected optical sectional images ($g_c'$, $g_s'$), wherein predetermined filter operators, which are inverted in relation to the convolution operations, are applied separately to the optical sectional images ($g_c$, $g_s$), and
- demodulating (S2) the corrected optical sectional images ($g_c'$, $g_s'$) for producing the image function ($r$).

2. Method according to Claim 1, wherein the filter operators

   - comprise linear, regularized-inverse filter operators, and/or
   - are constructed from the Fourier transforms of the optical sectional images ($g_c$, $g_s$) and the modified illumination point spread function ($h_1$).

3. Method according to at least one of the preceding claims, wherein the optical sectional images ($g_c$, $g_s$) are formed by the convolution operations according to

$$g_c(\underline{x}) = \left(f(\underline{x})\cos(\omega x)\right) * \left(v(z)\left|h_D(\underline{x})\right|^2\right)$$

and

$$g_s(\underline{x}) = -\left(f(\underline{x})\sin(\omega x)\right) * \left(v(z)\left|h_D(\underline{x})\right|^2\right),$$

where ($h_D$) is a detection point spread function and $v(z) = \int\cos(\omega x_1)[\int|h_I(x_1,y_1,z)|^2 dy_1]dx_1$.

4. Method according to Claim 3, wherein the corrected optical sectional images ($g_c'$, $g_s'$) are calculated by filter operators according to:

$$g'_c = f\cos(\omega x) = F^{-1}\left\{\frac{H_D * G_C}{|H_D|^2 + \beta}\right\}$$

and

$$g'_s = f\sin(\omega x) = -F^{-1}\left\{\frac{H_D * G_S}{|H_D|^2 + \beta}\right\},$$

where $H_D = F\{v|h_D|^2\}$, $Gc = F\{g_c\}$ and $Gs = F\{g_s\}$, wherein $\beta$ is a predetermined regularization parameter.

5. Method according to Claim 4, including the step of:

   - setting the regularization parameter $\beta$ depending on at least one property of the optical sectional images ($g_c$, $g_s$).

6. Method according to Claim 5, wherein the regularization parameter $\beta$ is set depending on a noise parameter of the optical sectional images ($g_c$, $g_s$).

7. Method according to at least one of the preceding claims, wherein the image function ($r$) is calculated according to

$$r = \sqrt{{g'_c}^2 + {g'_s}^2}$$

for the purposes of demodulating the corrected optical sectional images ($g_c'$, $g_s'$).

8. Method according to at least one of the preceding Claims 1 to 6, wherein the image function ($r$) is calculated according to $r = \lfloor g'_c + jg'_s \rfloor e^{j\omega x}$ for the purposes of demodulating the corrected optical sectional images ($g_c'$, $g_s'$).

9. Method according to at least one of the preceding claims, wherein the optical sectional images ($g_c$, $g_s$) are formed directly by an image recording (S0.1) or are ascertained by an inverse modulation from an uncorrected image function ($r'$) (S0.2).

10. Imaging method for obtaining an image function ($r$) of an object (1) using a method according to at least one of the preceding claims, including the steps of:

- periodically structured illumination (S0.11) of the object (1),
- detection (S0.12) of a multiplicity of intermediate images ($g'$),
- ascertainment (S0.13) of optical sectional images ($g_c$, $g_s$) from the intermediate images ($g_i$), and
- reconstruction (S1, S2) of the image function ($r$) using the method according to at least one of the preceding claims.

11. Imaging apparatus (100) for obtaining an image function ($r$) of an object (1), comprising:

- an image recording device (10) for periodically structured illumination of the object (1) by means of a grating structure and for detecting a multiplicity of intermediate images ($g'$), which are recorded with different phase angles of the grating structure, and
- a sectional image computer (20) for ascertaining optical sectional images ($g_c$, $g_s$) from the respective intermediate images ($g_i$), wherein the optical sectional images ($g_c$, $g_s$) are contructed by convolution operations of the object function ($f$) with a modified illumination point spread function ($h_1$), which represents the point spread function that is modified by the extent of the grating structure in the axial direction of the imaging,

**characterized by**

- a reconstruction device (30) for reconstructing an image function ($r$) that represents an object function ($f$) of the object (1) from the optical sectional images ($g_c$, $g_s$), wherein the reconstruction device contains a filter circuit (31) for the separate application of predetermined filter operators, which are inverted with respect to the convolution operations, to the optical sectional images ($g_c$, $g_s$) for the purposes of producing corrected optical sectional images ($g_c'$, $g_s'$), and a demodulation circuit (33) for producing the image function ($r$) from the corrected optical sectional images ($g_c'$, $g_s'$).

12. Imaging apparatus according to Claim 11, wherein the reconstruction device (30) is configured to carry out a reconstruction method according to at least one of Claims 1 to 9.

13. Imaging apparatus according to Claim 11 or 12, wherein

- the filter circuit (31), when configured to carry out a method according to Claim 4, comprises an actuator (32) for setting the regularization parameter $\beta$, and/or
- the image recording device (100) is part of an optical microscope.

14. Microscope, comprising an imaging apparatus (100) according to at least one of Claims 11 to 13.

15. Reconstruction device (30), designed to reconstruct an image function ($r$), which represents an object function ($f$) of an object (1), from optical sectional images ($g_c$, $g_s$) using a method according to any one of Claims 1 to 9, comprising:

- a filter circuit (31) for applying predetermined filter operators to the optical sectional images ($g_c$, $g_s$) for producing corrected optical sectional images ($g_c'$, $g_s'$), and
- a demodulation circuit (33) for producing the image function (r) from the corrected optical sectional images ($g_c'$, $g_s'$).

16. Microscope, comprising a reconstruction device (30) according to Claim 15.

17. Computer program product, situated on a computer-readable storage medium, comprising program code for carrying out a reconstruction method according to at least one of Claims 1 to 9.

18. Apparatus, comprising a computer-readable storage medium, which contains program instructions for carrying out a reconstruction method according to at least one of Claims 1 to 9.

**Revendications**

1. Procédé de reconstruction d'une fonction image (*r*) représentant une fonction objet (*f*) d'un objet (1) présentant une structure de réseau au moyen d'un éclairage structuré de manière périodique, à partir d'images sectionnelles optiques (*g_c*, *g_s*), qui sont respectivement calculées à partir d'images intermédiaires acquises pour différentes positions de phase de la structure de réseau et qui sont formées après des opérations de repliement de la fonction objet (*f*) à l'aide d'une fonction de transfert ponctuelle d'éclairage modifiée (*h_1*), laquelle représente la fonction de transfert ponctuelle qui est modifiée par extension de la structure de réseau dans la direction axiale de l'image formée, **caractérisée par** les étapes consistant à :

   - générer (S1) des images sectionnelles optiques corrigées (*g_c'*, *g_s'*), dans lequel des opérateurs de filtrage prédéterminés sont appliqués de manière séparée aux images sectionnelles optiques (*g_c*, *g_s*), lesquels opérateurs sont l'inverse des opérations de repliement, et
   - démoduler (S2) les images sectionnelles optiques corrigées (*g_c'*, *g_s'*) afin de générer la fonction image (*r*) .

2. Procédé selon la revendication 1, dans lequel les opérateurs de filtrage

   - comprennent des opérateurs de filtrage linéaires inverses régularisés et/ou
   - sont construits à partir des images sectionnelles optiques (*g_c'*, *g_s'*) soumises à une transformation de Fourier et de la fonction de transfert ponctuelle d'éclairage modifiée (*h_1*).

3. Procédé selon au moins l'une des revendications précédentes, dans lequel les images sectionnelles optiques (*g_c'*, *g_s'*) après les opérations de repliement sont données par :

$$g_c(\underline{x}) = \left( f(x)\cos(\omega x) \right) * \left( v(z)\left| h_D(\underline{x}) \right|^2 \right)$$

et

$$g_s(\underline{x}) = -\left( f(\underline{x})\sin(\omega x) \right) * \left( v(z)\left| h_D(\underline{x}) \right|^2 \right),$$

où (*h_D*) est une fonction de transfert ponctuelle de détection et $v(z) = \int\cos(\omega x_1)[\int |h_I(x_1,y_1,z)|^2 dy_1]dx_1$.

4. Procédé selon la revendication 3, dans lequel les images sectionnelles optiques corrigées (*g_c'*, *g_s'*) sont calculées à l'aide d'opérateurs de filtrage conformément à :

$$g'_c = f\cos(\omega x) = F^{-1}\left\{ \frac{H_D * G_C}{\left| H_D \right|^2 + \beta} \right\}$$

et

$$g'_s = f\sin(\omega x) = F^{-1}\left\{ \frac{H_D * G_S}{\left| H_D \right|^2 + \beta} \right\},$$

avec
$H_D = F\{v|h_D|^2\}$, $G_C = F\{g_c\}$, $G_S = F\{g_s\}$, où $\beta$ est un paramètre de régularisation prédéterminé.

5. Procédé selon la revendication 4, comprenant l'étape consistant à :

- régler le paramètre de régularisation $\beta$ en fonction d'au moins une propriété des images sectionnelles optiques $(g_c, g_s)$.

**6.** Procédé selon la revendication 5, dans lequel le paramètre de régularisation $\beta$ est réglé en fonction d'un paramètre de bruit des images sectionnelles optiques $(g_c, g_s)$.

**7.** Procédé selon au moins l'une des revendications précédentes, dans lequel, pour démoduler les images sectionnelles optiques corrigées $(g_c', g_s')$, la fonction image $(r)$ est calculée conformément à $r = \sqrt{g_c'^2 + g_s'^2}$.

**8.** Procédé selon au moins l'une des revendications précédentes, dans lequel, pour démoduler les images sectionnelles optiques corrigées $(g_c', g_s')$, la fonction image $(r)$ est calculée conformément à $r = |g_c' + jg_s'|e^{j\omega x}$.

**9.** Procédé selon au moins l'une des revendications précédentes, dans lequel les images sectionnelles optiques $(g_c, g_s)$ sont formées (S0.1) immédiatement après une acquisition d'image ou sont déterminées (S0.2) par l'intermédiaire d'une rétro-modulation à partir d'une fonction image $(r')$ non corrigée.

**10.** Procédé de formation d'image destiné à obtenir une fonction image $(r)$ d'un objet (1) par utilisation d'un procédé selon au moins l'une des revendications précédentes, comprenant les étapes consistant à :

- éclairer de manière structurée périodiquement (S0.11) l'objet (1),
- détecter (S0.12) une pluralité d'images intermédiaires $(g')$,
- déterminer (S0.13) des images sectionnelles optiques $(g_c, g_s)$ à partir d'images intermédiaires $(g_i)$, et
- reconstruire (S1, S2) la fonction image $(r)$ au moyen du procédé selon au moins l'une des revendications précédentes.

**11.** Dispositif de formation d'image (100) destiné à obtenir une fonction image $(r)$ d'un objet (1), comprenant :
un moyen d'acquisition d'image (10) destiné à éclairer de manière structurée périodiquement l'objet (1) au moyen d'une structure de réseau et à détecter une pluralité d'images intermédiaires $(g')$, lesquelles sont acquises à des positions de phase différentes de la structure de réseau, et

- un calculateur d'images sectionnelles destiné à déterminer des images sectionnelles optiques $(g_c, g_s)$ à partir des images intermédiaires $(g_i)$ respectives, dans lequel les images sectionnelles optiques $(g_c, g_s)$ sont formées après des opérations de repliement de la fonction objet $(f)$ à l'aide d'une fonction de transfert ponctuelle d'éclairage modifiée $(h_1)$, laquelle représente la fonction de transfert ponctuelle qui est modifiée par extension de la structure de réseau dans la direction axiale de l'image formée,

**caractérisé par** :

- un moyen de reconstruction (30) destiné à reconstruire une fonction image $(r)$ qui représente une fonction objet $(f)$ de l'objet (1) à partir des images sectionnelles optiques $(g_c, g_s)$, dans lequel le moyen de reconstruction comporte un circuit de filtrage (31) destiné à appliquer de manière séparée des opérateurs de filtrage prédéterminés, qui sont l'inverse des opérations de repliement, aux images sectionnelles optiques $(g_c, g_s)$ afin de générer des images sectionnelles optiques corrigées $(g_c', gs')$,
et un circuit de démodulation (33) destiné à générer la fonction image $(r)$ à partir des images sectionnelles optiques corrigées $(g_c', g_s')$.

**12.** Dispositif de formation d'image selon la revendication 11, dans lequel le moyen de reconstruction (30) est conçu pour mettre en oeuvre un procédé de reconstruction selon au moins l'une des revendications 1 à 9.

**13.** Dispositif de formation d'image selon la revendication 11 ou 12, dans lequel

- le circuit de filtrage (31), lorsqu'il est conçu pour mettre en oeuvre un procédé selon la revendication 4, comporte un élément de réglage (32) destiné à régler le paramètre de régularisation $\beta$ et/ou
- le moyen d'acquisition d'image (100) fait partie d'un microscope optique.

**14.** Microscope comportant un dispositif de formation d'image (100) selon au moins l'une des revendications 11 à 13.

**15.** Moyen de reconstruction (30) conçu pour reconstruire une fonction image ($r$) qui représente une fonction objet ($f$) d'un objet (1) à partir d'images sectionnelles optiques ($g_c$, $g_s$), au moyen d'un procédé selon l'une des revendications 1 à 9, comprenant :

    - un circuit de filtrage (31) destiné à appliquer des opérateurs de filtrage prédéterminés aux images sectionnelles optiques ($g_c$, $g_s$) afin de générer des images sectionnelles optiques corrigées ($g_c'$, $g_s'$), et
    - un circuit de démodulation (33) destiné à générer la fonction image ($r$) à partir des images sectionnelles optiques corrigées ($g_c'$, $g_s'$).

**16.** Microscope comportant un moyen de reconstruction (30) selon la revendication 15.

**17.** Produit de programme d'ordinateur se trouvant sur un support de stockage lisible par ordinateur, comportant un code de programme destiné à mettre en oeuvre un procédé de reconstruction selon au moins l'une des revendications 1 à 9.

**18.** Dispositif comprenant un support de stockage lisible par ordinateur qui contient des instructions de programmes destinées à mettre en oeuvre un procédé de reconstruction selon au moins l'une des revendications 1 à 9.

Start

Bereitstellung von optischen
Schnittbildern ($g_c$, $g_s$)  S0

Anwendung von Filteroperatoren,
Erzeugung von korrigierten optischen Schnittbildern ($g_c'$, $g_s'$)  S1

Demodulation zur Erzeugung einer
Bildfunktion ($r$)  S2

Ende

Bildaufnahme mit strukturierter Beleuchtung  S0.1

Bildpräparation aus gegebenen Bilddaten S0.2

FIG. 1

100

40

33  30

31  32

20

5.6

10

5.6

12

11

13

5.6

1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004038483 A1

**In der Beschreibung aufgeführte Nicht-Patentliteratur**

- **L. H. SCHAEFER et al.** *Journal of Microscopy,* 2004, vol. 216, 165-174

- **L. H. SCHAEFER et al.** *Journal of Microscopy*